# EUROPEAN PATENT SPECIFICATION

(11) **EP 3 817 912 B1**
(45) Date of publication and mention of the grant of the patent: **29.05.2024**
(21) Application number: 19734111.8
(22) Date of filing: 03.07.2019
(51) Int. Cl.: B29C 65/34, B29C 65/50, F16L 47/03, B29C 65/36, F16L 47/02

(54) **COUPLING ELEMENT, COUPLING ASSEMBLY WITH SUCH A COUPLING ELEMENT AND METHOD OF COUPLING A FIRST SUBSTRATE TO SUCH A COUPLING ELEMENT**
KUPPLUNGSELEMENT, KUPPLUNGSANORDNUNG MIT EINEM SOLCHEN KUPPLUNGSELEMENT UND VERFAHREN ZUM VERBINDEN EINES ERSTEN SUBSTRATS MIT EINEM SOLCHEN KUPPLUNGSELEMENT
ÉLÉMENT DE COUPLAGE, ENSEMBLE DE COUPLAGE DOTÉ D'UN TEL ÉLÉMENT DE COUPLAGE ET MÉTHODE DE COUPLAGE D'UN PREMIER SUBSTRAT À UN TEL ÉLÉMENT DE COUPLAGE

(30) Priority: 03.07.2018 LU 100865
(43) Date of publication of application: 12.05.2021
(73) Proprietor: Aliaxis Research & Technology, 78990 Élancourt (FR)
(72) Inventor: TEIXEIRA PINTO, José Miguel, 78540 Vernouillet (FR); KLEITZ, Olivier, 78410 Aubergenville (FR); VALLEAU, Aline, 78540 Vernouillet (FR); RENARD, Paul Henri, 95330 Pontoise (FR); JULIEN, Olivier, 95280 Jouy-Le-Moutier (FR)
(74) Representative: Sonnenberg Harrison Partners
(86) International application number: PCT/EP2019/067868
(87) International publication number: WO 2020/007921

(56) References cited:
- EP-A2- 2 508 561
- KR-A- 20080 057 794
- KR-A- 20120 025 975
- KR-A- 20130 004 866
- KR-A- 20130 039 523

## Description

### Cross-reference to related applications

This application claims priority to the patent application LU 100865 filed 03 July 2018.

### Field of the invention

The present invention generally relates to bonding technologies using thermal activation and/or energy supply. More precisely, the present invention relates to a coupling element, a connection with such a coupling element and a method for manufacturing such a coupling element.

A coupling element designed to allow assembly by induction welding or electrofusion of at least two thermoplastic components is already known from patent application FR 2 748 415 A1. The coupling element includes a body of thermoplastic material in which elastic heating elements, e.g. elastic spiral spring (s), are embedded in a pre-tensioned state. During the welding operation, the elastic heating element melts the material surrounding the elastic heating element. This allows it to then move and transition from its pre-tensioned state to its natural state astride between the two welded parts.

Other method of joining coupling pipes are known in which adhesives are used for connecting pipes. However, the adhesives comprise chemical substances such as solvents which are prone to evaporate during assembly. It is known, however, that some of the chemical substances may have a negative impact on the environment and/or human health. Industrials are trying to reduce the impact of the industry on the environment and/or the human health, in particular by identifying potential hazardous chemical substances to protect humans and the environment. This is for example one of the objectives of the European regulation entitled Registration, Evaluation, Authorisation and Restriction of Chemicals (REACH).

Among these chemical substances, solvents are known to have a negative impact.

Other examples of coupling assembly by electrofusion or induction welding are disclosed in GB 2 327 992, FR 2 516 439 or EP 0 430 761. In these examples, the method of coupling comprises electrofusion with either one or both of the elements configured in multilayer materials, such as polyethylene or polypropylene, and conductive wire or a metal stamped on the thermoplastics. During electrofusion, the material of the pipe or fitting to be coupled together melt and there is a mixing of the materials of the multilayer material, the pipe and the fitting.

Additionally, it is known to use a foaming agent to compensate for the diameter tolerances generated in the production process of polyethylene sewer pipes and difference in pipe diameter caused by circularity variation that may be generated during load transportation in welding processes. For example, EP 2 508 561 or US4090899 provide a foaming agent in the welding zone to foam the pipe. Another foaming agent is used in KR 20130004866 in which a foam sheet is foamed while expanding in volume. The water tightness is ensured by pressure generated by the expanded foam sheet.

It is an object of the present invention to provide alternative solution to coupling, in which there is no need for solvent-based adhesives.

Document EP 2 508 561 teaches a coupling element according to the preamble of claim 1 and a method of coupling using such coupling element.

### Summary of the invention

To this end, the invention proposes a coupling element according to claim 1, comprising a coupling body having a first joining surface, said coupling body comprising a bonding material being weldable at a melting temperature, and at least one heating element, provided to heat the bonding material at a temperature equal to or greater than the melting temperature, the at least one heating element being encapsulated with the bonding material or provided at the first joining surface. The bonding material is a transition polymer.

Therefore, the present invention proposes a fitting or coupling element with a bonding material, comprising a transition polymer with a heating element that can be encapsulated inside the polymer or over the polymer. The heating element will receive the energy (electrical, magnetic field, exotermic reaction initiation...) and heat (by joule effect, exotermic reaction...). The heating element is provided to heat until at least the melting temperature of the transition polymer. The welded transition polymer provides for the adhesion between the coupling element and a substrate of another element, by melting and sticking to the substrate. The other element may be a pipe or another fitting.

It should be noted that the melting temperature of the transition polymer can be different from the melting temperature of the substrates.

The bonding material is a transition polymer, also named hot melt polymers or hot melt adhesives (HMA). Hot melt polymers are based on thermoplastic polymers, which are solid at room temperature and have a softening or melting temperature lower/equal or slightly higher, e.g. 5 to 10°C, than the substrate material which is known to be low, up to 210°C or lower. Only the hotmelt material should melt, and should melt before the substrate material starts to melt, thereby requiring lower energy than prior art thermal joining method. Upon solidification, hot melt polymers return to a physical state that has structural integrity and can function as an adhesive. Indeed, the softening or melting temperature of the hot melt polymers is known to be low, up to the melting temperature of the substrate or slightly higher. However the hot melt polymers and the substrate have a bad thermal-conductivity, therefore the substrate will not melt during the melting operation of the hot melt, because the heat will not have enough time to propagate to start the melting of the substrate. When in the molten state, the hotmelt material has a high physical and chemical affinity with the substrate and adheres to it, therefore only the hotmelt needs to be molten, but not the substrate coupler or the pipe. This requires lower energy than prior art thermal joining method. Upon solidification, hot melt polymers return to a physical state that has structural integrity and can function as an adhesive.

It is known to use hot melt polymers as glue, wherein the holt melt polymer is applied as a liquid adhesive by extruding, rolling, bi-injection, coextrusion, in line assembly or spraying the hot melt polymer on the surface of a first object to be assembled and joining with another object is carried out immediately after application.

However, the present invention suggests providing a coupling element with both the transition polymer and the heating element, in situ. Preferred applications are for example pipe couplings or in the plumbing, but these are examples only.

The energy for melting the transition polymer is dependent on the thickness/volume of this one.

It should be noted that, due to the differences of melting temperatures between the bonding material and the coupling body, only the bonding material will melt during coupling between the coupling element and a substrate of another element for the adhesion between the coupling element and a substrate of another element, by melting and sticking to the substrate. For example, when assembling a pipe with the coupling element, only the bonding material (hot melt polymer) is caused to soften and melt, whereas the pipe substrate and the coupling body, e.g. made of PVC or CPVC, do not melt, and there is not mixing of material between the welded hot melt polymer and the pipe. Upon solidification, the hot melt polymer forms an adhesive layer between the pipe and the coupling element.

According to the invention, the heating element is permeable to the bonding material. This allows the flowing of the melted bonding material for a better bonding. In particular, this enables both layers to mix each other and to create a strong bonding, in particular when the heating elements is not directly provided on the bonding material but on a support layer.

In one aspect, the bonding material comprises a first layer of bonding material at the first joining surface, and wherein the at least one heating element is provided on said first layer of bonding material, either directly or on a support layer. The support layer may have holes enabling the bonding material to mix between the two layers, i.e. the layer of bonding material and the support layer supporting the at least one heating element. Again, it is contemplated that during assembly with a pipe, only the bonding material will soften, so that there is no mixing of materials between the bonding material and the pipe. The bonding material, upon solidification, provides for an adhesive layer, in which the at least one heating element, and possibly the support layer when provided with holes, has/have been embedded.

The at least one heating element may comprise a resistance heatable by Joule effect or induction, for example made of printed electronics, preferably made of conductive ink. The printed electronics may be encapsulated within the bonding material or located on the first joining surface.

It should be noted that that the bonding material and/or the support layer can be filled with conductive fillers, enabling to redirect the heat in the bonding material and melt the bonding material. The melting can be achieved sequentially the hotmelt regions. Examples of fillers include particles, nanoparticles, microparticles, microflakes, nanoflakes, metallic fibers, carbon fibers.

The resistance may comprise a printed heater which can be deactivated after the bonding has been completed, to provide a one shot heating solution, wherein the printed heater has a printed shape with higher resistivity parts, where the resistivity of the printed heater is higher than in the remaining parts of the printed heater.

The coupling element may further comprise one or more sensors, wherein the one or more sensor(s) comprises at least one of a temperature sensor, RFID tag, strain sensor, pressure sensor. The sensor(s) may be printed sensors which can be printed at the same time as the printed heater. Otherwise, the sensor(s) can also be combined with printed heater. The heating element can therefore be provided with one or more functionality enabling to provide feedback on the quality of the welded joint or to provide continuous monitoring for a pipeline in which the coupling element has been used for coupling of pipes.

In another aspect, the at least one heating element may comprise a conductive nanofoil. Such reactive nanofoils comprise mutually reactive metals, sputtered to form thin layers that create a laminated foil. An exothermic reaction can be triggered by a heat pulse, a laser pulse, an electric spark, a flame, or by any other means. For example, the nanofoil may comprise one of an aluminum-nickel multilayered foil, aluminium-titanium, or titanium-amorphous silicon.

In a further aspect, the bonding material further comprises a second layer of bonding material, wherein the at least one heating element is sandwiched between the first and second layers of bonding material, in particular wherein the at least one element is provided on a support layer sandwiched between the first layer and the second layer.

The first layer of bonding material may comprise a first transition material and the second layer of bonding material comprises a second transition material, thereby enabling varying melting or bonding properties at the different layers. For example the first transition material and the second transition material may melt at different melting temperatures.

According to the invention, a foaming agent or a blowing agent is provided preferably within the bonding material. Advantageously, the foaming agent can expand within the bonding material, thereby providing extra pressure closing all gaps. The foaming agent or blowing agent is thermally activated foaming/blowing agent and is added to the bonding material.

The foaming agent is chosen to have an activation temperature so that the foaming agent can be activated by the heat generated by the heating element in the bonding material during the molten phase. This results in the expansion of the bonding material for the closing of any potential existing gap between the pipe and the fitting. Only the bonding material layer will foam. Indeed, a combination of a foaming layer with a specific bonding material (hot melt polymer) is innovative as the mutual adjustment in reactivity temperatures and the gluing in presence of foamed areas is considered particularly difficult to handle. The pipe element or elements to be coupled by the coupling element should not reach their melting temperature since only the bonding material is provided to melt.

The activation temperature of the foaming agent is equal to or higher than the melting temperature of the bonding material. Preferably, the activation temperature of the foaming agent is slightly higher, in the range of 2 to 20 °C, more preferably in the range of 5 to 10°C, than the melting temperature of the bonding material.

Another embodiment for providing a foaming agent or blowing agent consists in the encapsulation of a third material charged with foaming/blowing agents inside the bonding material. This third material can well be a different type of bonding material, the substrate material (PVC or CPVC) or other material that is compatible with the bonding material and the foaming agent melting and activation temperatures. When the heating element heats up, the bonding material will soften and melt, while activating the blowing agent inside the third encapsulated material.

In this embodiment, the encapsulated material expands and pushes the bonding material against the pipe and the fitting closing any eventual tolerance gaps.

Yet another way of providing a foaming agent or blowing agent consists in providing a first layer of bonding material and a second layer of bonding material facing each other on both sides of the heating element. The first layer of bonding material comprises a hotmelt mixed with a first additive, and the second layer of bonding material comprises a hotmelt mixed with a second additive. During heating, both bonding material layers melt and the first and second additives come in contact and react to produce an inert gas, in turning resulting in the foaming of the bonding material. The bonding material expands and closes any potential gap between the pipe and the fitting. Additionally, the shrinkage of the bonding material during cooling is reduced.

An inert gas means that the inert gas does not react with the medium, such as gas or water, of the pipe installation in which the coupling element is used. Similarly, the inert gas does not react with the coupling element once coupled in the piping/system, and should not react with the hotmelt.

For example, the first additive may be a polycarboxylic acid family component like citric acid, and the second additive may be an inorganic carbonate family component e.g. sodium bicarbonate. In this embodiment, the chemical reaction produces the inert gas CO2, in turn resulting in the foaming of the bonding material. The bonding material expands and closes any potential gap between the pipe and the fitting. Additionally, the shrinkage of the bonding material during cooling is reduced.

It should be noted that only the bonding material will foam.

In yet another aspect, an energy supply portion, in particular connectors, for supplying heating energy to the heating element. This allows providing energy in situ, directly y on the coupling element. The energy supply portion may be deactivated after use. For example, the energy supply portion may be provided within the molten bonding material.

It should be noted that during assembly with a pipe, only the first and second layer of bonding material will soften, so that there is no mixing of material between the bonding material and the pipe. The bonding material, upon solidification, provides for an adhesive layer, in which the at least one heating element, and possibly the support layer when provided with holes, has/have been embedded.

The coupling element may be configured to be arranged in a sleeve/ring form, with ends configured to be mutually engaged to maintain the sleeve/ring shape.

The present invention also proposes a coupling assembly comprising such a coupling element and a first substrate assembled on the first joining surface.

In an aspect, the coupling assembly comprises a second substrate, wherein the first substrate and the second substrate are joined together by said coupling element by the welded bonding material upon welding the bonding material, preferably wherein the second substrate is assembled on a second joining surface on an opposite side of the coupling body with respect to the first joining surface.

The first substrate may be one of a first pipe element and of a first socket for insertion of the pipe element, and the second substrate may be another one of a second pipe element and of a socket.

In yet another aspect, the first substrate is a multilayer pipe element having a main pipe body section and a free end, and the bonding material is provided to cover said free end of the pipe element.

The present invention further proposes a method of coupling a first substrate to a coupling element as described above, comprising the steps of: adjoining the first substrate on the coupling element, and providing energy to the at least one heating element to cause the heating of the bonding material up to the melting temperature, to obtain a coupling assembly. The melted bonding material is allowed to flow for a better bonding.

In an aspect, the first substrate is coupled to a first layer of bonding material provided at the joining surface.

In another aspect, the method comprises the step of deactivating the heating element after the completion of the bonding, in particular irreversibly deactivating the heating element. The printed heating elements are sensitive to the temperature of heating due to its shape or geometry. Therefore the printed heater can be designed in a way that in combination with the right heating cycle after the full melting of the hotmelt leading to a viable joint is achieved, once the coupling element has been coupled via the hot melt polymer to a piping element or a fitting, It is only after that melting phase that leading to a viable coupling that the printed heater will overheat on a specific region and result in a scission of the conductive printed heater. For example, for a co-polyester type hotmelt may be heated at a temperature of 210° C to achieve a full melting leading to a coupling, and the overheating temperature may be of around 250°C to fuse the printed heater.

The present invention yet further proposes the use of a transition polymer in a method as described above, in a coupling assembly and/or in a coupling element as described above.

### Brief description of the figures

Other features and advantages of the present invention will become apparent from the description below in conjunction with the accompanying drawings showing an example of an embodiment which include, but are not limited to:
Figure 1A shows a coupling element according to one embodiment of the present invention;
Figure 1B showing the coupling element of Fig. 1A coupled with a first substrate according to one embodiment of the present invention;
Figure 2 shows a coupling element according to another embodiment of the present invention;
Figure 3 shows a coupling element according to yet another embodiment of the present invention;
Fig. 4 shows a coupling element provided with a foaming agent according to yet another embodiment of the present invention, and Figs 4B to 4D show different embodiments of a coupling element provided with a foaming agent according to the present invention;
Fig. 5 is a block diagram of a method of assembling of a coupling element according to another embodiment of the present invention;
Fig.6A-6E show a coupling assembly with a coupling element according to one embodiment of the present invention;
Fig.7 shows a coupling assembly with a coupling element according to one embodiment of the present invention;
Figure 8 shows a coupling assembly with a coupling element according to one embodiment of the present invention.

In the drawings, identical or similar elements are indicated with identical or similar reference numbers.

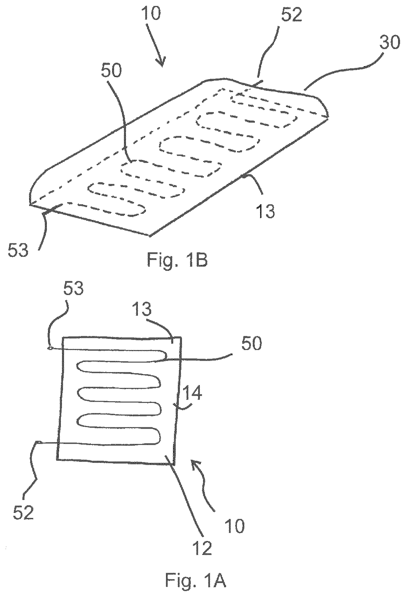

Figure 1A shows a coupling element 10 according to one embodiment of the present invention and Fig. 1B shows the coupling element 10 being coupled with a first substrate 30.

The coupling element 10 comprises a coupling body 12 having a first joining surface 13, and a second joining surface 14 opposite the first joining surface 13, and at least one heating element 50.

The coupling body 12 is made of a bonding material which is weldable at a melting temperature. The bonding material is a transition polymer, also referred to as a hot melt, as will be explained later in the description.

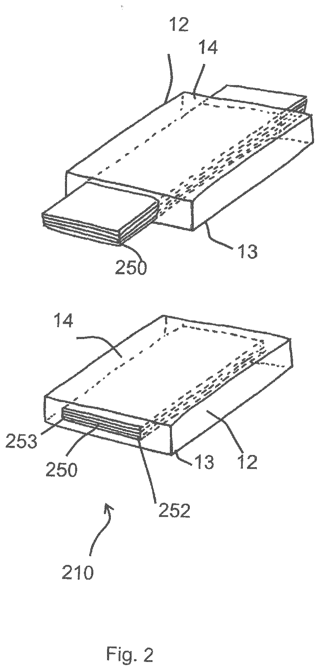

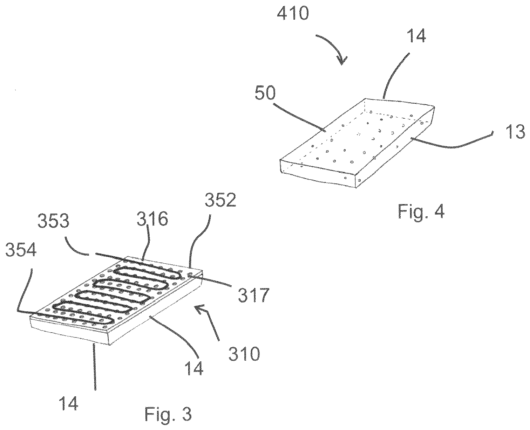

In the example of Fig. 1A, the at least one heating element 50 is provided at the first joining surface 13. This is not limiting the invention and the heating element 50 may be provided on both the first and second joining surfaces 13, 14, or may be encapsulated within the bonding material, such as the example of Fig 2 and 3.

The heating element 50 is provided to heat the bonding material at a temperature at least equal to or greater than the melting temperature, to cause the welding of the bonding material.

In the example of Figs. 1A and 1B, the heating element 50 is a resistive wire located at the joining surface 13 heatable by electromagnetic energy. The resistive wire of Figs. 1A and 1B can be heated by Joule effect. To this end, the heating element 50 comprises electrical contacts 52, 53, which can be brought into contact with a source of electrical power.

The skilled person will understand that the resistive wire need not be located at or on the joining surface and may be a coil embedded within the bonding material. Further, the coil or resistive wire may be heated up by induction. Instead of coil, microparticles can be embedded in the bonding material and heated by induction.

The resistive heating element may advantageously be a flat zigzag wire element. A flat zigzag element can be easily implemented in the industrialization process. Further, a zigzag wire allows providing the two electrical contacts on one side of the coupling element, instead of having a first electrical contact on one side and the other electrical contact on the other side. This implementation is compact and helps avoiding short circuits between the two electrical contacts. This design further ensures that the electrical contacts do not come out in the middle of a fitting or coupling element during welding.

A resistive wire can be heated up to a maximum temperature of 800°C or more.

The bonding material is a transition polymer, also named hot melt polymers or hot melt adhesives. Hot melt polymers are based on thermoplastic polymers., which are solid at room temperature and have a softening or melting temperature which is known to be low, up to the melting temperature of the substrate or higher. When in the molten state the hotmelt material has a high physical and chemical affinity with the substrate and adheres to it, therefore only the hotmelt need to be molten and requires lower energy than prior art thermal joining method. Upon solidification, hot melt polymers return to a physical state that has structural integrity and can function as an adhesive.

As mentioned previously, the present invention suggests providing a coupling element with both the transition polymer and the heating element, in situ. Preferred applications are for example pipe couplings or in the plumbing, but these are examples only. The example of pipe coupling will be explained later on in the description, but this is not limiting the invention.

Advantageously, the melting temperature can remain lower than the melting temperature of the substrate, implying less volume/mass and lower melting temperature, therefore less energy to be provided. As mentioned above, the melting temperature can be up to the substrate melting temperature or higher. It should be noted that the melting temperature can be tailored by playing with the molecular weight of the hot melt or by adding additives modifying the material viscosity of the hot melt polymer.

An example of bonding material that can be used in the coupling elements of the present invention is a Platamid hotmelts or a Co-polyester type hotmelt, which is well indicated for adhesion with a substrate made of C-PVC.

The bonding material is provided to melt and act as a glue, i.e. there is a physico-chemical interaction between the bonding material and e.g. the substrate of the pipe to which the coupling element will be assembled. It is important to understand that only the bonding material is provided to soften and melt, not the substrate of the pipe element. There is no mixing of material between the bonding material and the pipe substrate.

Fig. 2 shows another example of coupling element 210 according to another aspect of the invention, which differs from the coupling element of fig. 1 by the heating element, as described below. The elements identical to Figs 1 and 2 have the same reference numeral.

The coupling element 210 comprise a coupling body 12 of bonding material defining a first joining surface 13 and a second joining surface 14. A heating element 250 in the form of conductive reactive nanofoils is provided, embedded within the bonding material of the coupling element body 12.

Such reactive nanofoils comprise mutually reactive metals, sputtered to form thin layers that create a laminated foil. An exothermic reaction can be triggered by a heat pulse, a laser pulse, an electric spark, a flame, or by any other means. For example, the nanofoil may comprise one of an aluminum-nickel multilayered foil, aluminium-titanium, or titanium-amorphous silicon.

The nano foil can be excited by electrical current supplied through electrical contacts 252, 253, and upon excitation, an exothermic reaction starts that can reach out to a temperature of 1500°C in a few milliseconds, as known in the art. The velocity and temperature of the reaction can be controlled by adjusting the thickness of the layers.

In an aspect of the invention, a superposition of different nanofoil layers may enable elevating the temperature of the bonding material progressively. Indeed, a first layer of nano foil can be used to trigger a consecutive reaction of a second layer of nano foil, said second layer of nano foil activating consecutively the subsequent nano foil layer., and so on.

The bonding material comprises a hot melt polymer, similarly to the coupling element 10 of Fig. 1.

Fig. 3 shows yet another example of coupling element 310 according to a further aspect of the invention, which differs from the coupling element of figs. 1 and 2 essentially by the heating element, as described below. The elements identical to Figs 1 and 2 have the same reference numeral.

In the example of Fig. 3, the heating element 350 is a printed heater made of conductive ink with resistive properties. The printed heater can be heated up by joule Effect, similar to the resistive wire of the coupling element of Fig. 1.

As shown in Fig. 3, the printed heater 350 is printed on a support layer 352 embedded within the bonding material, in particular sandwiched between a first layer 316 and a second layer 317 of bonding material.

The support layer 352 has holes enabling the bonding material to mix between the two layers.

This is not limiting the invention and the ink can be printed on the surface of the transition polymer directly.

The printed ink forms resistive resistances that will heat by joule effect and distribute the heat homogeneously on/within the bonding material.

Suitable ink materials can be carbon, silver, copper,...or any other suitable material. One advantage of printed heater is that it allows for a choice of printed shape, possible thin heaters, as well as a flexibility. Indeed, printed heater can be bent if needed, for example to assume a circular shape. The maximum heating temperature may be around 120°C-150°C according to specification of the ink used for the printed heater.

It should be noted that that the bonding material and/or the support layer can be filled with conductive particles, enabling to redirect the heat in the bonding material and melt the bonding material. The melting can be achieved sequentially the hotmelt regions, depending on the requirements.

Preferably, the ink comprises wax particles allowing the ink to be a self-regulating, thereby avoiding degradation of the ink due to heating. In particular, the wax particles expand with heat, but when expanded the wax particles will break the conductivity between the conductive particles in the ink, thereby stopping the heating by Joule effect. Such a self-regulating ink enables controlling the melting of the transition polymer inside its transformation window. Further, the skilled person understands that a self-regulating ink may be reusable, whilst conductive inks without self-regulating properties will heat until degradation.

The support layer 352 can be made any substrate material compatible with the hotmelt adhesive, e.g. made of Polyethylene terephthalate (PET).

The first layer 316 of bonding material and the second layer 317 of bonding material preferably comprise the same material. However, the first layer of bonding material may comprise a first holt melt polymer and the second layer of material may comprise a second holt melt material or may comprises the same material or different material.

In the example of Fig. 3, the printed heater 350 is embedded within the bonding material. This is not limiting the invention, and the printed heater 350 may be provided at one of the first joining surface 13, second joining surface 14, or both, either on a support layer or directly on the bonding material, similar to the resistive wire 50 of Fig. 1.

A printed heater can be advantageously deactivated in an irreversible manner, after the bonding has been completed, to provide a one shot heating solution, thereby avoiding multiple heating of the bonding material or of the coupling element. A one shot printed heater can indeed be designed so as to have a printed shape with higher resistivity parts, where the resistivity of the printed heater is higher. The temperature will increase more in those high resistivity parts than in the remaining parts of the printed heater. The extra temperature increase results in the fusion of the printed heater and break of the conductivity. When a critical temperature is reached based on a predesigned heating cycle that ensure the right bonding of the hotmelt to the substrates (aligned with the application temperature of the bonding material) followed by a overheat of the heating element the heating will stop. The application temperature is the melting temperature which provides for a good adhesion of the bonding material to the substrate or to the pipe element to which tis is to be assembled.

Another advantage of printed heaters is to provide the printed heater with one or more sensors. Indeed, during printing of the heating element over the bonding material or the substrate, one or more sensor(s) can be printed at the same time. The one or more sensor(s) may be one of a temperature sensor, RFID tag, strain sensor, pressure sensor. For example, the heating element can therefore provided with one or more functionality enabling to provide feedback on the quality of the welded joint or to provide continuous monitoring for a pipeline in which the coupling element has been used for coupling of pipes.

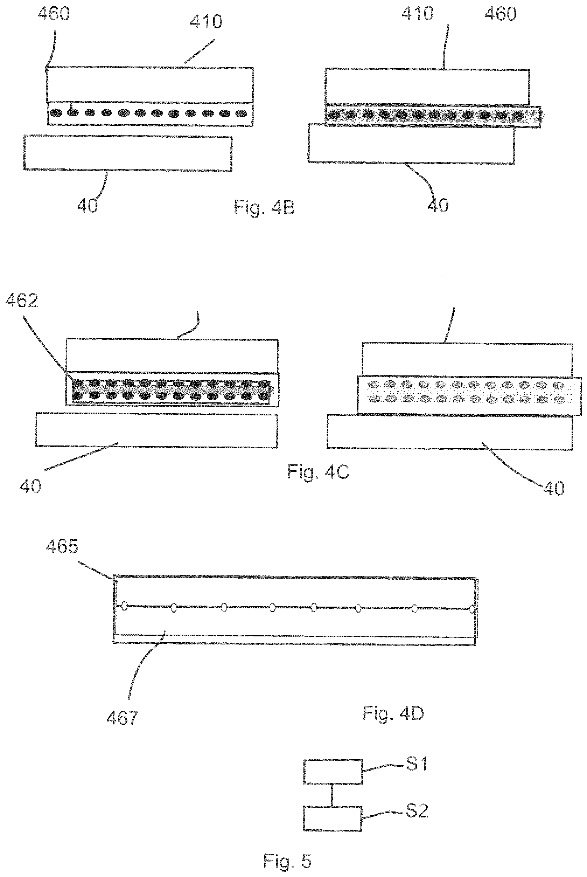

Fig. 4 shows a coupling element 410 according to yet another embodiment of the present invention, which differs from the coupling of the Figs. 1 to 3 by the bonding material, having further a foaming agent 460. The foaming agent can expand within the bonding material, thereby providing extra pressure closing all gaps between the coupling element and the substrate (eg of a pipe) to which it is glued, after assembly.

Indeed, the skilled person understands the thickness of the bonding material change during heating. For example, if the bonding material is a thermoplastic or semi crystalline polymer, heating of the bonding material up to the melting temperature results in the fusion of the crystals. Foaming agents can therefore expand and compensate potential gaps or volume changes that might occur, e.g. during pipe cutting, preparation, storage...or be created during heating between a substrate and the coupling element. The increases the quality of the coupling.

The foaming agent is chosen to have an activation temperature so that the foaming agent can be activated by the heat generated by the heating element in the hotmelt material during the molten phase. This results in the expansion of the hotmelt material for the closing of any potential existing gap between the pipe 40 and the coupling element 410. Only the hotmelt layer will foam.

The foaming agent has an activation temperature equal to or higher than the melting temperature of the bonding material. Preferably the foaming agent has an activation temperature lying in a range of 5 to 20°C higher than the melting temperature of the bonding material. For example, the hot melt melting temperature may be of around 200°C, and the foaming agent is chosen to have an activation temperature of 200-220°C, preferably 205-210°C, to be activated once the bonding material is fully molten.

Fig. 4B to 4D give examples of embodiments in which the coupling element has a bonding material with a foaming agent, before and after assembly with a pipe 40 (left and right side, respectively). In Fig. 4B, the foaming agent or a blowing agent 460 is provided within the bonding material 450. Advantageously, the foaming agent can expand within the bonding material, thereby providing extra pressure closing all gaps. The foaming agent or blowing agent is thermally activated foaming/blowing agent and is added to the hotmelt material.

In Fig. 4C, the bonding material encapsulates a third material 462 charged with foaming/blowing agents 460. This third material can well be a different type of bonding material, the substrate material (PVC or CPVC) or any other material that is compatible with the bonding material and the foaming agent melting and activation temperatures. When the heating element heats up, the bonding material will soften and melt, while activating the blowing agent inside the third encapsulated material. As a result, the encapsulated third material 462 expands and pushes the bonding material against the pipe and the fitting closing any eventual tolerance gaps.

In Fig. 4D, the bonding material is a double layer material sandwiching the heating element. A first layer 465 of hot melt mixed with a first additive and a second layer 467 of hotmelt with a second additive face each other on both sides of the heating element. During heating, both bonding material layers melt and the first and second additives come in contact and react to produce an inert gas, in turn resulting in the foaming of the bonding material. The bonding material expands and closes any potential gap between the pipe and the fitting. Additionally, the shrinkage of the bonding material during cooling is reduced.

An inert gas means that the inert gas does not react with the medium, such as gas or water, of the pipe installation in which the coupling element is used. Similarly, the inert gas does not react with the coupling element once coupled in the piping/system, and should not react with the hotmelt.

For example, the first additive may be a polycarboxylic acid family component like citric acid, and the second additive may be an inorganic carbonate family component e.g. sodium bicarbonate. In this embodiment, the chemical reaction produces the inert gas CO2, in turn resulting in the foaming of the bonding material.

It should be understood that only the bonding material will foam or expand, or the additional material provided within the bonding material, during coupling to the substrate. The substrate itself does neither melt nor expand.

The coupling element results on a combination of heating element with the bonding element:
It should be further noted that the heating device may be permeable to the bonding material, enabling both layers to mix each other and to create a strong bonding, in particular when the heating elements is not directly provided on the bonding material but on a support layer.

The bonding body may have different layers of bonding material, such as a first layer with a first bonding material and a second layer with a second bonding material. For example, the first material may be a hard hot melt polymer configured to be on a fitting or socket side, with the hard only slightly melting during the coupling, and the second material may be a softer bonding material, preferably with foam, configured to be on a pipe side. The second material can compensate diametral tolerances and melt easily, thereby creating a good adhesion with the pipe.

It is also envisaged to provide the coupling element with a first bonding material and a second bonding material having different melting temperatures, so that the first and second materials melt at different time points. For example, the first material may melt earlier and may be provided to melt and cover pipe ends or pipe, whilst the second material may melt later and may be provided to melt with a socket.

The present application therefore proposes using hot melt polymers provided with a heating element directly in a coupling element on the substrate or object to be assembled. A foaming agent is provided to compensate potential gaps or volume changes that might occur, e.g. during pipe cutting, preparation, storage... or be created during heating between a substrate and the coupling element.

The foaming agent is chosen to have a melting and activation temperatures so that the foaming agent can be activated by the heat generated by the heating element in the hotmelt material during the melting phase. This results in the expansion of the hotmelt material for the closing of any potential existing gap between the pipe and the fitting. Only the hotmelt layer will foam.

It should be further noted that the heating element may be provided directly on an outside layer of bonding material, at the first and/or second joining surface. The heating element may otherwise be incorporated between two layers of bonding materials or embedded within the bonding material. In this case, the heating element is advantageously provided with holes, permeable to the bonding material, allowing the mixing of the different layers of bonding material.

The coupling element may be pre-assembled with or on a first substrate 30 positioned along one of the first joining surface 13 and the second joining surface 14, in order to form a first coupling assembly, by causing the heating element 50 to heat the bonding material up to the melting temperature. Once joined together and after solidification of the bonding material, the resulting coupling assembly is formed by the first substrate with a coating formed by the coupling body of the coupling element.

For example, the first substrate 30 can be a fitting for a pipe element, thereby forming a fitting with a coating made of bonding material (hot melt), with the heating element being still present in the fitting after assembly of the first substrate and coupling element.

The coupling element may be assembled directly between a first substrate 30 positioned against the first joining surface 13 and a second substrate 40 positioned against the second joining surface 14, thereby forming an adhesive between the first substrate and the second substrate upon welding the bonding material. In this case, the coupling element forms an adhesive insert.

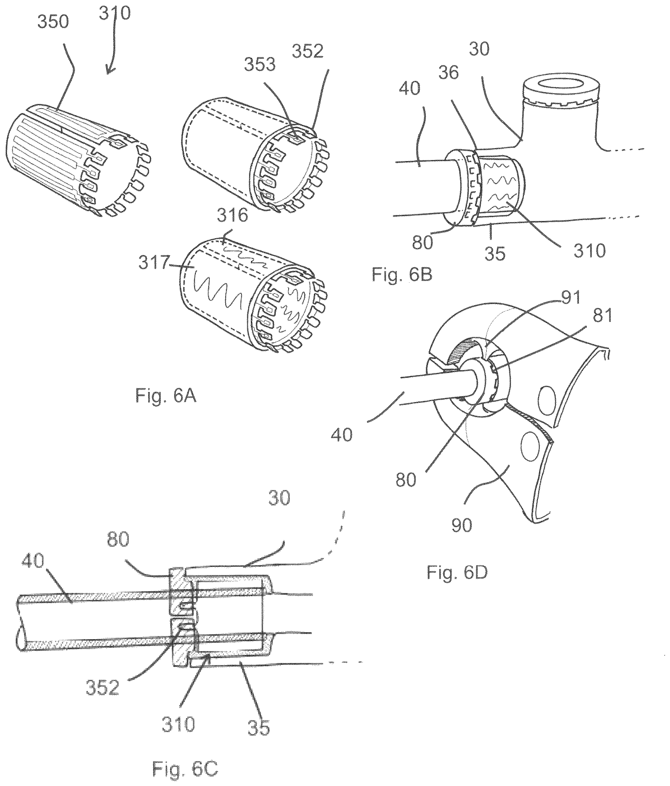

For example, Fig. 5 shows the step of a method of coupling described in reference with Fig. 6A-6E, having the coupling element 310 of Fig. 3. This is not limiting the invention and any of the coupling element of Fig. 1 to 4 can be used.

In a first step S1, the coupling element 310, shown on Fig. 6A, is inserted between a fitting 30 as first substrate and a pipe 40 as second substrate, to form the connection by assembly, as illustrated on Fig. 6B.

The fitting 30 includes a sleeve forming a socket 35. The socket 35 has an inner diameter substantially equal to the outer diameter of the coupling element 310, with a free end 36.

Any examples of connection between a socket and a pipe could be envisioned, such as a straight sleeve, a T, a reducer, a cap, an elbow, or any other example of connection currently used in plumbing.

The pipe elements or fittings may be made of PERT, PEX, PVC, CPVC, PP, copper, brass.

In this example and as shown on Fig. 6A, the coupling element 350 comprises a layer of printed heaters 350 sandwiched between a first layer of transition polymer 316 and a second layer of transition polymer 317, and rolled for insertion within the socket 35, with the electrical contact 352, 353 remain accessible, for providing access to a source of energy.

Different bonding materials may be used having different properties, for example different colors, for visualization of the correct coupling.

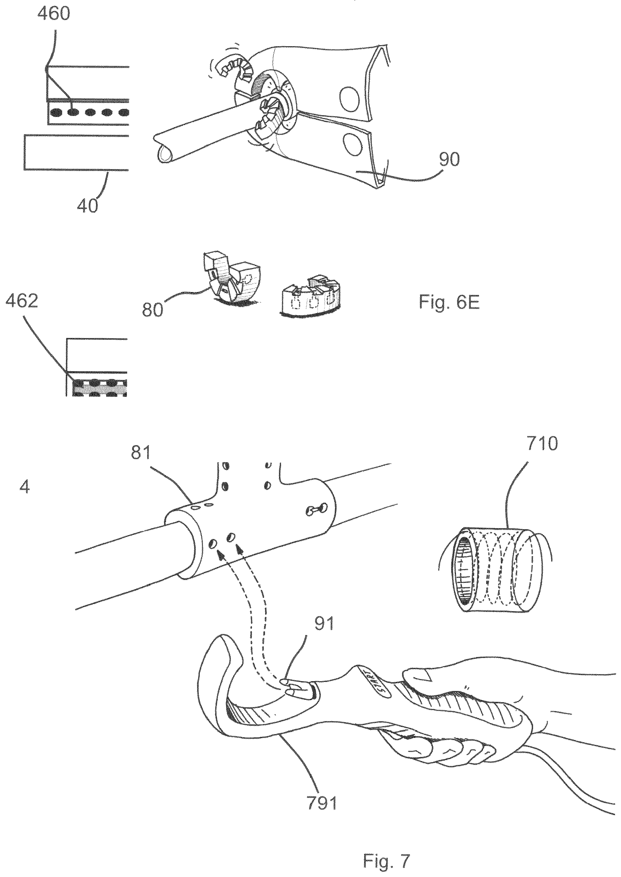

In a second step S2, illustrated with reference to Figs. 6C, 6D and 6E, the electrical contacts 352, 353, are connected to the source of energy, causing the printed heater 350 to heat and thereby heating the bonding material at least to the melting temperature, up to the welding of the bonding material of the coupling element 10 along the joining surfaces 13 and 14 of the coupling element 310. For example, connector of a power supply clamp can be brought to the electrical connectors 352, 353.

More precisely, in the example of Figs.6A-6E, a connecting ring 80 is brought into contact with the electrical contacts 352, 353, to surround the free end 36 of the socket. The connecting ring 80 is provided with peripheral openings 81, for insertion of corresponding connectors 91 of a power supply tool, such as a power supply clamp 90. Once inserted, a tension can be applied on the electrical contacts 352, 353, through the power supply tool 90. This causes the heating of the heating element 350 due to Joule effect, and the consecutive melting of the bonding material.

The access to the source of energy, i.e. the electrical contacts, may be removed after assembly. For example, as seen on Fig. 6E, the electrical contacts 352, 353 also softens during heating, so that after welding, applying pressure on the connecting ring 80, using the power supply clamp 90, may break both the connecting ring and the electrical contacts 352, 535 interacting with the connecting ring. Therefore, the electrical contacts may simply break after/on removal the power supply clamp 90 after welding. If the welding is not done, the connecting ring or the connectors are not soft and can not break.

In the examples of Figs.6A-6E, the heating element is a printed resistance, and a connecting ring 80 is provided with openings through which the connectors of a supply clamp may contact the electrical connectors of the heating elements. In Fig. 7, the coupling element comprises a copper wire coil embedded in a bonding material, similar to the coupling element 10 of Fig. 1A. The coupling element is inserted into between a fitting 30 as first substrate and a pipe 40 as second substrate, to form the connection by assembly. The fitting 30 is provided with openings 781 allowing the electrical connection of the connectors of the power supply tool 790.

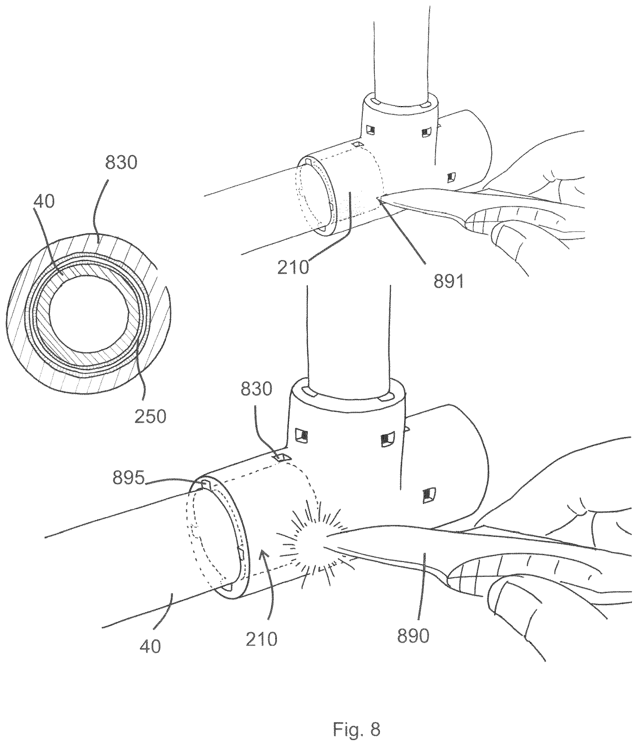

Yet another example is shown on Fig. 8, in which the coupling element comprises a nanofoil 250 embedded in a bonding material, similar to the coupling element 210 of Fig. 2. The coupling element is inserted into between a fitting 30 as first substrate and a pipe 40 as second substrate, to form the connection by assembly. The fitting 830 is provided with openings 881 allowing the electrical connection of the connectors of the power supply tool 890. In this example, the power supply tool 890 is used for ignition of the exothermic reaction.

Visual indicators 895 are provided on the fitting, allowing visual inspection. A color change of the indicators may indicate that the welding has occurred.

The skilled person understands that the resistive wire or the printed heaters remain in the coupling after assembly. Advantageously, the heating elements can be used for later use, for example for heating water flowing in a such a coupling. Other electronics uses are possible, such as the integration of a printed antennae or RFID.

It should be understood that the heating element or the support layer of the heating element also undergo heating and may deform during heating. This can disable the heating function for further use, or this can be used to transform the heating element. The transformation of the heating element can give an indication on the quality of welding.

Indeed, the transformation may occur during a transformation window in which the heating element deform in a defined or known manner, indicating that the welding has been completed. For example, the heating element may change into an RFID antenna.

In an aspect of the invention, the substrate is a multi-layer pipe element (MLP) having a free end and a main pipe body section. It may be advantageous to provide the bonding material not only to cover the main pipe body section but also the free end of the pipe element, so as to protect the pipe end against corrosion or degradation.

This invention is defined by the appended claims.

## Claims

1. A coupling element (10, 210, 310, 410) comprising
- a coupling body (12) having a first joining surface (13), said coupling body (12) comprising a bonding material being weldable at a melting temperature,
- at least one heating element (50, 250, 350), provided to heat the bonding material at a temperature equal to or greater than the melting temperature, the at least one heating element being encapsulated with the bonding material or provided at the first joining surface,
- said bonding material being a transition polymer,
- wherein the bonding material is provided with a foaming agent, preferably within the bonding material, wherein the foaming agent has an activation temperature so that the foaming agent can be activated by the heat generated by the heating element in the bonding material during the molten phase,
- **characterized in that** the heating element is permeable to the bonding material

2. The coupling element according to claim 1, wherein the bonding material comprises a first layer of bonding material at the first joining surface, and wherein the at least one heating element is provided on said first layer of bonding material, either directly or on a support layer.

3. The coupling element according to claim 1 or 2, wherein the at least one heating element comprises a resistance heatable by Joule effect or induction, in particular a resistive wire such as zigzag wire.

4. The coupling element according to claim 3, wherein the bonding material and/or the support material can be filled with conductive particles enabling to direct heat in the bonding material

5. The coupling element according to claim 3 or 4, wherein the resistance is made of printed electronics, preferably made of conductive ink, wherein the printed electronics are encapsulated within the bonding material or located on the first joining surface.

6. The coupling element according to claim 1 or 2, wherein the at least one heating element comprises a conductive nanofoil.

7. The coupling element according to any of the preceding claims, wherein the bonding material further comprises a second layer (317) of bonding material, wherein the at least one heating element is sandwiched between the first and second layers of bonding material, in particular wherein the at least one element is provided on a support layer sandwiched between the first layer and the second layer.

8. The coupling element according to the preceding claim, wherein the first layer of bonding material comprises a first transition material and the second layer of bonding material comprises a second transition material.

9. The coupling agent according to any of the preceding claims, wherein the activation temperature of the foaming agent is equal to or higher than the melting temperature of the bonding material.

10. The coupling element according to any of the preceding claims, wherein the foaming agent is provided inside an encapsulation material charged with said foaming agent and encapsulated inside the bonding material, wherein the encapsulation material is chosen to be compatible with the bonding material melting temperature and the foaming agent and activation temperature.

11. The coupling element according to any of the preceding claims, wherein a first layer of hot melt mixed with a first additive and a second layer of hotmelt mixed with a second additive are provided facing each other on both sides of the heating element, wherein the first additive and the second additive, when in contact, may react to form an inert gas.

12. The coupling element of the preceding claim, in which the first additive is a polycarboxylic acid family component like citric acid, and the second additive is an inorganic carbonate family component e.g. sodium bicarbonate.

13. The coupling element according to any of the preceding claims, further comprising an energy supply portion, in particular connectors, for supplying heating energy to the heating element.

14. The coupling element according to any of the preceding claims, wherein the heating element is provided with holes through which the melted bonding material may flow.

15. The coupling element according to any of the preceding claims, configured to be arranged in a sleeve/ring form, with ends configured to be mutually engaged to maintain the sleeve/ring shape.

16. A coupling assembly (1) comprising a coupling element (10) according to any of the previous claims, and a first substrate assembled on the first joining surface.

17. The coupling assembly according to the preceding claim, comprising a second substrate, wherein the first substrate and the second substrate are joined together by said coupling element by the welded bonding material upon welding the bonding material, preferably wherein the second substrate is assembled on a second joining surface on an opposite side of the coupling body with respect to the first joining surface.

18. A method of coupling a first substrate to a coupling element according to any of claims 1 to 15, comprising the steps of:
- adjoining the first substrate on the coupling element
- providing energy to the at least one heating element to cause the heating of the bonding material up to the melting temperature, to obtain a coupling assembly, wherein the heating element is permeable to the bonding material,
wherein the method comprises activating a foaming agent by the heat generated by the heating element in the bonding material during the molten phase, to foam the bonding material.

19. A method of claim 18, wherein the foaming agent is provided inside an encapsulation material charged with said foaming agent and encapsulated inside the bonding material, wherein the encapsulation material is chosen to be compatible with the bonding material melting temperature and the foaming agent and activation temperature.

20. A method of claim 18 or 19, comprising providing a first layer of hot melt mixed with a first additive, and a second layer of hotmelt comprises a hotmelt mixed with a second additive, so that the first and second layer face each other on both sides of the heating element, causing the reaction of the first and second additives during heating, thereby producing an inert gas in turn resulting in the foaming of the hotmelt.

21. The method according to any of claim 18 to 20, comprising the step of deactivating the heating element after the completion of the bonding, in particular irreversibly deactivating the heating element.

## Patentansprüche

1. Kopplungselement (10, 210, 310, 410) umfassend
- einen Kopplungskörper (12) mit einer ersten Verbindungsfläche (13), wobei der Kopplungskörper (12) ein bei einer Schmelztemperatur schweißbares Bondiermaterial umfasst,
- mindestens ein Heizelement (50, 250, 350), bereitgestellt um das Bondiermaterial auf eine Temperatur zu erwärmen, die gleich oder höher als die Schmelztemperatur ist, wobei das mindestens eine Heizelement in dem Bondiermaterial eingekapselt oder an der ersten Verbindungsfläche vorgesehen ist,
- wobei das Bondiermaterial ein Übergangspolymer ist,
- wobei das Bondiermaterial mit einem Schäumungsmittel versehen ist, vorzugsweise innerhalb des Bondiermaterials, wobei das Schäumungsmittel eine Aktivierungstemperatur hat, so dass das Schäumungsmittel durch die von dem Heizelement in dem Bondiermaterial während der Schmelzphase erzeugte Wärme aktiviert werden kann,
- **dadurch gekennzeichnet, dass** das Heizelement für das Bondiermaterial durchlässig ist.

2. Kopplungselement nach Anspruch 1, bei welchem das Bondiermaterial eine erste Schicht des Bondiermaterials an der ersten Verbindungsfläche umfasst, und wobei das mindestens eine Heizelement entweder direkt auf der ersten Schicht des Bondiermaterials oder auf einer Trägerschicht bereitgestellt ist.

3. Kopplungselement nach Anspruch 1 oder 2, bei welchem das mindestens eine Heizelement einen Widerstand umfasst, der durch Joule-Effekt oder Induktion erwärmbar ist, insbesondere einen Widerstandsdraht wie einen Zickzack-draht.

4. Kopplungselement nach Anspruch 3, bei welchem das Bondiermaterial und/oder das Trägermaterial mit leitfähigen Partikeln gefüllt sein kann/können, die es ermöglichen, Wärme in das Bondiermaterial zu leiten.

5. Kopplungselement nach einem der Ansprüche 3 bis 4, bei welchem das Heizelement aus gedruckter Elektronik gebildet ist, vorzugsweise aus leitfähiger Tinte gebildet, wobei die gedruckte Elektronik in dem Bondiermaterial eingekapselt ist oder auf der ersten Verbindungsfläche angeordnet ist.

6. Kopplungselement nach einem der Ansprüche 1 bis 2, bei welchem das Heizelement eine leitfähige Nanofolie umfasst.

7. Kopplungselement nach einem der vorangegangenen Ansprüche, bei welchem das Bondiermaterial ferner eine zweite Schicht (317) des Bondiermaterials umfasst, wobei das mindestens eine Heizelement zwischen der ersten und der zweiten Schicht des Bondiermaterials sandwichartig angeordnet ist, insbesondere ist das mindestens eine Element auf einer Trägerschicht sandwichartig zwischen der ersten und der zweiten Schicht angeordnet.

8. Kopplungselement nach dem vorangegangenen Anspruch, bei welchem die erste Schicht des Bondiermaterials ein erstes Übergangsmaterial umfasst und die zweite Schicht des Bondiermaterials ein zweites Übergangsmaterial umfasst.

9. Kopplungselement nach einem der vorangegangenen Ansprüche, bei welchem die Aktivierungstemperatur des Schäumungsmittels gleich ist zu oder höher ist als die Schmelztemperatur des Bondiermaterials.

10. Kopplungselement nach einem der vorangegangenen Ansprüche, bei welchem der Schaumbildner in einem Kapselungsmaterial vorgesehen ist, das mit dem Schäumungsmittels beladen ist und in dem Bindematerial eingekapselt ist, wobei das Kapselungsmaterial so gewählt ist, dass es mit der Schmelztemperatur des Bondiermaterials und dem Schäumungsmittels und der Aktivierungstemperatur kompatibel ist.

11. Kopplungselement nach einem der vorangegangenen Ansprüche, bei welchem eine erste Schicht aus mit einem ersten Zusatzstoff vermischtem Hotmelt und eine zweite Schicht aus mit einem zweiten Zusatzstoff vermischtem Hotmelt auf beiden Seiten des Heizelements einander gegenüberliegend angeordnet sind, wobei der erste Zusatzstoff und der zweite Zusatzstoff, wenn in Kontakt, zur Bildung eines Inertgases reagieren können.

12. Kopplungselement nach dem vorangegangenen Anspruch, bei welchem der erste Zusatzstoff eine Komponente aus der Familie der Polycarbonsäuren, wie Zitronensäure, und der zweite Zusatzstoff eine Komponente aus der Familie der anorganischen Carbonate, z.B. Natriumbicarbonat, ist.

13. Kopplungselement nach einem der vorangegangenen Ansprüche, ferner umfassend einen Energiezufuhrabschnitt, insbesondere Steckverbinder, zum Zuführen von Heizenergie zu dem Heizelement.

14. Kopplungselement nach einem der vorangegangenen Ansprüche, bei welchem das Heizelement mit Löchern versehen ist, durch die das geschmolzene Bondiermaterial fließen kann.

15. Kopplungselement nach einem der vorangegangenen Ansprüche, eingerichtet um in Form einer Hülse/eines Rings angeordnet zu sein/werden, wobei die Enden eingerichtet sind, um miteinander in Eingriff zu stehen/gelangen, um die Hülsen-/Ringform beizubehalten.

16. Kopplungsanordnung (1), umfassend ein Kopplungselement (10) nach einem der vorangegangenen Ansprüche und ein erstes Substrat, das auf der ersten Verbindungsfläche angebracht ist.

17. Kopplungsanordnung nach dem vorangegangenen Anspruch, umfassend ein zweites Substrat, wobei das erste Substrat und das zweite Substrat miteinander verbunden sind/werden durch das Kopplungselement durch das geschweißte Bondiermaterial beim Schweißen des Bondiermaterials, wobei vorzugsweise das zweite Substrat auf einer zweiten Verbindungsfläche auf einer der ersten Verbindungsfläche gegenüberliegenden Seite des Kopplungskörpers angebracht ist.

18. Verfahren zum Verbinden eines ersten Substrats mit einem Kopplungselement nach einem der Ansprüche 1 bis 15, umfassend die Schritte:
- Anbringen des ersten Substrats an das Kopplungselement
- Bereitstellen von Energie für das mindestens eine Heizelement, um die Erwärmung des Bondiermaterials auf die Schmelztemperatur zu bewirken, um eine Kopplungsanordnung zu erhalten, wobei das Heizelement für das Bondiermaterials durchlässig ist,
wobei das Verfahren das Aktivieren eines Schäumungsmittels durch die von dem Heizelement in dem Bondiermaterial während der Schmelzphase erzeugte Wärme umfasst, um das Bondiermaterial aufzuschäumen.

19. Verfahren nach Anspruch 18, wobei das Schäumungsmittel innerhalb eines Kapselungsmaterials bereitgestellt wird, das mit dem Schäumungsmittel gefüllt und innerhalb des Bondiermaterials eingekapselt ist, wobei das Kapselungsmaterial so gewählt wird, dass es mit der Schmelztemperatur des Bondiermaterials und dem Schäumungsmittel und der Aktivierungstemperatur kompatibel ist.

20. Verfahren nach Anspruch 18 oder 19, bei dem eine erste Schicht einer mit einem ersten Zusatzstoff vermischtes Hotmelt und eine zweite Schicht einer mit einem zweiten Zusatzstoff vermischtes Hotmelt bereitgestellt werden, so dass die erste und die zweite Schicht einander auf beiden Seiten des Heizelements gegenüberliegen, wodurch die Reaktion der ersten und der zweiten Zusatzstoffe während des Erwärmens bewirkt wird, wodurch ein Inertgas erzeugt wird, das wiederum zum Aufschäumen des Hotmelt führt.

21. Verfahren nach einem der Ansprüche 18 bis 20, umfassend den Schritt des Deaktivierens des Heizelements nach Abschluss des Bondierens, insbesondere des irreversiblen Deaktivierens des Heizelements.

## Revendications

1. Elément de couplage (10, 210, 310, 410) comprenant
- un corps de couplage (12) ayant une première surface d'assemblage (13), ledit corps de couplage (12) comprenant un matériau de liaison pouvant être soudé à une température de fusion,
- au moins un élément chauffant (50, 250, 350), prévu pour chauffer le matériau de liaison à une température égale ou supérieure à la température de fusion, le au moins un élément chauffant étant encapsulé dans le matériau de liaison ou prévu à la première surface d'assemblage,
- ledit matériau de liaison étant un polymère de transition,
- le matériau de liaison étant pourvu d'un agent moussant, de préférence à l'intérieur du matériau de liaison, l'agent moussant ayant une température d'activation de sorte que l'agent moussant peut être activé par la chaleur générée par l'élément chauffant dans le matériau de liaison au cours de la phase de fusion,
- **caractérisé par le fait que** l'élément chauffant est perméable au matériau de liaison.

2. Elément de couplage selon la revendication 1, dans lequel le matériau de liaison comprend une première couche de matériau de liaison sur la première surface d'assemblage, et dans lequel le au moins un élément chauffant est fourni sur ladite première couche de matériau de liaison, soit directement soit sur une couche de support.

3. Elément de couplage selon la revendication 1 ou 2, dans lequel dans lequel le au moins un élément chauffant comprend une résistance chauffée par effet Joule ou par induction, en particulier un fil résistant tel qu'un fil en zigzag.,

4. Elément de couplage selon la revendication 3, dans lequel le matériau de liaison et/ou le matériau de support peut/peuvent être chargé(s) de particules conductrices permettant de diriger la chaleur dans le matériau de liaison.

5. Elément de couplage selon la revendication 3 ou 4, dans lequel la résistance est constituée d'électronique imprimée, de préférence en encre conductrice, l'électronique imprimée étant encapsulée dans le matériau de liaison ou située sur la première surface d'assemblage.

6. Elément selon la revendication 1 ou 2, dans lequel l'au moins un élément chauffant comprend une nanofeuille conductrice.

7. Elément de couplage selon l'une quelconque des revendications précédentes, dans lequel le matériau de liaison comprend en outre une deuxième couche (317) de matériau de liaison, dans lequel le au moins un élément chauffant est pris en sandwich entre la première et la deuxième couche de matériau de liaison, en particulier dans lequel le au moins un élément est fourni sur une couche de support prise en sandwich entre la première couche et la deuxième couche.

8. Elément de couplage selon la revendication précédente, dans lequel la première couche de matériau de liaison comprend un premier matériau de transition et la deuxième couche de matériau de liaison comprend un deuxième matériau de transition.

9. Elément de couplage selon l'une des revendications précédentes, dans lequel la température d'activation de l'agent moussant est égale ou supérieure à la température de fusion du matériau de liaison.

10. Elément de couplage selon l'une quelconque des revendications précédentes, dans lequel l'agent moussant est fourni à l'intérieur d'un matériau d'encapsulation chargé avec l'agent moussant et encapsulé à l'intérieur du matériau de liaison, le matériau d'encapsulation étant choisi pour être compatible avec la température de fusion du matériau de liaison, l'agent moussant et la température d'activation.

11. Elément de couplage selon l'une quelconque des revendications précédentes, dans lequel une première couche de hotmelt mélangée à un premier additif et une deuxième couche de hotmelt mélangée à un deuxième additif sont fournis, qui se font face l'une l'autre des deux côtés de l'élément chauffant, dans lequel le premier additif et le deuxième additif, lorsqu'en contact, peuvent réagir pour former un gaz inerte.

12. Elément de couplage selon la revendication précédente, dans lequel le premier additif est un composant de la famille des acides polycarboxyliques tel que l'acide citrique, et le deuxième additif est un composant de la famille des carbonates inorganiques, par exemple le bicarbonate de sodium.

13. Elément de couplage selon l'une quelconque des revendications précédentes, comprenant en outre une partie d'alimentation en énergie, en particulier des connecteurs, pour fournir de l'énergie de chauffage à l'élément chauffant.

14. Elément de couplage selon l'une quelconque des revendications précédentes, dans lequel l'élément chauffant est pourvu de trous à travers lesquels le matériau de liaison fondu peut s'écouler.

15. Elément de couplage selon l'une des revendications précédentes, configuré pour être disposé sous forme de manchon/anneau, avec des extrémités configurées pour être mutuellement engagées afin de maintenir la forme de manchon/anneau.

16. Ensemble de couplage (1) comprenant un élément de couplage (10) selon l'une quelconque des revendications précédentes, et un premier substrat assemblé sur la première surface d'assemblage.

17. Ensemble de couplage selon la revendication précédente, comprenant un deuxième substrat, dans lequel le premier substrat et le deuxième substrat sont liés ensemble par ledit élément de couplage par le matériau de liaison soudé lors du soudage du matériau de liaison, de préférence le deuxième substrat étant assemblé sur une deuxième surface d'assemblage sur un côté opposé du corps de couplage par rapport à la première surface d'assemblage.

18. Procédé de couplage d'un premier substrat à un élément de couplage selon l'une quelconque des revendications 1 à 15, comprenant les étapes de :
- adjoindre le premier substrat à l'élément de couplage
- fournir de l'énergie à l'au moins un élément chauffant pour provoquer le chauffage du matériau de liaison jusqu'à la température de fusion, pour obtenir un ensemble de couplage, l'élément chauffant étant perméable au matériau de liaison,
- le procédé comprenant l'activation d'un agent moussant par la chaleur générée par l'élément chauffant dans le matériau de liaison pendant la phase de fusion, afin de faire mousser le matériau de liaison.

19. Procédé selon la revendication 18, dans lequel l'agent moussant est fourni à l'intérieur d'un matériau d'encapsulation chargé avec ledit agent moussant et encapsulé dans le matériau de liaison, le matériau d'encapsulation étant choisi pour être compatible avec la température de fusion du matériau de liaison, l'agent moussant et la température d'activation.

20. Procédé selon la revendication 18 ou 19, comprenant la fourniture d'une première couche de hotmelt mélangée à un premier additif, et une deuxième couche de hotmelt mélangée à un deuxième additif, de sorte que la première et la deuxième couche se font face des deux côtés de l'élément chauffant, provoquant la réaction du premier et du deuxième additif pendant le chauffage, produisant ainsi un gaz inerte qui entraîne à son tour le moussage du hotmelt.

21. Procédé selon l'une quelconque des revendications 18 à 20, comprenant l'étape de désactivation de l'élément chauffant après l'achèvement de la liaison, en particulier la désactivation irréversible de l'élément chauffant.
